# EUROPEAN PATENT APPLICATION

(11) **EP 3 734 318 A1**
(43) Date of publication of application: **04.11.2020**
(21) Application number: 19171607.5
(22) Date of filing: 29.04.2019
(51) Int. Cl.: G01S 5/02, H04W 4/021, G06Q 10/08

(54) **GEOFENCE PRIORITIZATION**

(71) Applicant: HERE Global B.V., 5611 ZT Eindhoven (NL)
(72) Inventor: WIROLA, Lauri, 33100 Tampere (FI); RAUHALA, Petri, 33100 Tampere (FI); LUOMI, Marko, 33100 Tampere (FI)
(74) Representative: Cohausz & Florack

(57) **Abstract**

Inter-alia, a method is disclosed comprising: obtaining a set of geofences, wherein each geofence of the set of geofences defines a respective geofence for an electronic device; determining one or more pieces of priority information for at least a part of the set of geofences, wherein a respective priority information of the one or more pieces of priority information is indicative of a prioritization of a respective geofence of the set of geofences; and providing at least a part of the set of geofences at least partially based on the one or more pieces of priority information to the electronic device, wherein at least the part of the set of geofences that is provided is evaluated by an electronic device, and another part of the set of geofences that is not provided is not evaluated by the electronic device. It is further disclosed an according apparatus, computer program and system.

## Description

### FIELD

The following disclosure relates to the field of positioning, or more particularly relates to systems, apparatuses, and methods for geofencing.

### BACKGROUND

The number of devices with location capabilities is expected to grow exponentially in the next decade. This growth is in particular the result of the Internet-of-Things (IoT)-era, in which more and more devices get connected to the Internet. Soon homes, factories, cities and transportation means will be equipped with low-cost sensors that produce real-time information on various characteristics and environment variables. Moreover, the cheaper electronics enables factories and industries to equip assets and supply chains with devices, such as sensors or trackers, that can provide real-time information on the flow of goods.

This basic ingredient of the IoT story is that the sensors and trackers are location-aware. The location-awareness can be achieved through two means: either the device has its own positioning capabilities (like Global Navigation Satellite System (GNSS) or cell/Wi-Fi/Bluetooth offline positioning), or the device makes measurements of the radio environment (cell/Wi-Fi/Bluetooth) and sends them to the cloud for position determination.

When it comes to small devices that must function autonomously for extended periods of time, power consumption is of special concern. The devices are powered by batteries and, thus, any means to reduce current drain are welcome. As far as location technologies are concerned, there are few ways to reduce power consumption. The greatest power saving results from using the correct technology at the correct time. To exemplify, when low location accuracy is adequate, it is advantageous to use cellular positioning, because it is cheap in terms of energy.

Location is important not only for simple tracking use cases, but also for event notifications. Specifically, when events are tied to geographical constraints, geofences can be utilized. A geofence may, for example, be a circular area. When a device enters (or leaves) the defined area, an observer gets notified about the event, e.g. by a triggered action. While geofences are powerful tools, they may also consume a lot of power. Thus, also in such use cases the correct choice of positioning technology is of essence.

### SUMMARY OF SOME EXEMPLARY EMBODIMENTS

Geofence can be evaluated either in a server or in a client. In the server-based approach, the device-to-be-tracked (e.g. a tracker) sends either its location represented by a location estimate or a location information or e.g. Wi-Fi measurements to the server for location determination. The server then evaluates the geofence conditions after the tracker location is known. The advantage of this approach is that the tracker specs can be low (no high CPU, storage, etc. requirements). The downside is the requirement to have continuous connectivity, which decreases battery lifetime significantly. Alternatively, if there is no continuous provision of location data from the tracker to the cloud, the geofence triggering may get delayed. Yet another downside is the high consumption of cloud resources in case there are lots of trackers and lots of geofences.

In the client-side implementation geofences are evaluated by the tracker itself. In such a case geofences are stored in the tracker and the tracker locates itself (e.g. GNSS and/or offline network positioning). The advantage of this approach is that the usage of resources can be optimized (e.g. clever usage of positioning technologies as a function of distance to the closest geofence). This can result in improved battery life. Further a limited need of cloud resources is enabled and immediate geofence triggering without a delay, when the geographical condition is met, can be achieved. The downside is that the tracker needs to meet higher CPU (for positioning) and storage (for offline radio maps) requirements.

As disclosed, battery life is of essence in many applications (the longer the battery life, the longer the time between maintenance breaks, the more are Total-Cost-of-Ownership (TCO) reduced). Therefore, when it comes to evaluating geofences, the client-side evaluation leads typically to better results.

However, in practical applications there can be thousands or tens of thousands of geofences. Then it becomes impractical to have all those geofences in the tracker due to e.g. CPU/storage reasons.

Thus, known solutions evaluate geofences typically in a cloud, respectively based on a cloud-positioning.

It is thus, inter alia, an object of the invention to enable evaluating of a plurality geofences while reducing or minimizing power consumption, and reducing requirements of CPU and/or storage in the client-side.

According to a first exemplary aspect of the present invention, a method is disclosed, the method comprising:
- obtaining a set of geofences, wherein each geofence of the set of geofences defines a respective geofence for an electronic device;
- determining one or more pieces of priority information for at least a part of the set of geofences, wherein a respective priority information of the one or more pieces of priority information is indicative of a prioritization of a respective geofence of the set of geofences; and
- providing at least a part of the set of geofences at least partially based on the one or more pieces of priority information to the electronic device, wherein at least the part of the set of geofences that is provided is evaluated by an electronic device, and another part of the set of geofences that is not provided is not evaluated by the electronic device.

This method may for instance be performed and/or controlled by an apparatus, for instance a server. Alternatively, this method may be performed and/or controlled by more than one apparatus, for instance a server cloud comprising at least two servers.

According to a further exemplary aspect of the invention, a computer program is disclosed, the computer program when executed by a processor causing an apparatus, for instance a server, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a second exemplary aspect of the present invention, a method is disclosed, the method comprising:
- obtaining at least a part of a set of geofences, wherein each geofence of the set of geofence defines a respective geofence for the at least one electronic device, wherein at least the part of the set of geofences is obtained at least partially based on one or more pieces of priority information, wherein a respective priority information of the one or more pieces of priority information is indicative of a prioritization of a respective geofence of the set of geofences;
- evaluating at least the part of the set of geofences; and
- triggering at least one action at least partially based on a result of the evaluating.

This method may for instance be performed and/or controlled by an electronic device, e.g. an Internet-of-Things (IoT) device, a tracker, or a low capability device. For instance, the method may be performed and/or controlled by using at least one processor of the electronic device.

According to a further exemplary aspect of the invention, a computer program is disclosed, the computer program when executed by a processor causing an apparatus, for instance a server, to perform and/or control the actions of the method according to the second exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising:
an apparatus according to the first exemplary aspect of the present invention as disclosed above, and
one or more electronic devices according to the second exemplary aspect of the present invention as disclosed above.

In the following, exemplary features and exemplary embodiments of all aspects of the present invention will be described in further detail.

By enabling that at least a part of the set of geofences is evaluated, e.g. on a server side by the method according to the first exemplary aspect of the present invention, and another part of the set of geofences is evaluated, e.g. on a client side by the method according to the second exemplary aspect of the present invention, it is enabled to evaluate a plurality of geofences while reducing or minimizing power consumption and/or CPU and/or storage (e.g. memory) requirements in the client-side since, e.g. only geofences of the set of geofences which are determined to be of a high priority (e.g. represented by a respective determined priority information) are evaluated by the electronic device (e.g. representing the client-side). Other geofences of the set of geofences are evaluated by the apparatus (e.g. a server or server cloud representing the server-side), so that all geofences of the set of geofences can be evaluated while the load for the electronic device is reduced respectively minimized.

Such an electronic device may for instance be of low capability (also referred to as low-capability device), e.g. not comprising or being connectable to a user input device (e.g. keypad, touchpad, or the like to name but a few non-limiting examples), and/or a display, e.g. for displaying information, e.g. to a user. Such an electronic device may for instance be an IoT device, or a tracker, to name but a few non-limiting examples. Such an electronic device may for instance be comprised by one or more physical products (e.g. goods to be transported, e.g. a box, a container, or the like to name but a few non-limiting examples), e.g. such an electronic device may for instance be attachable to such physical products.

A respective geofence of the set of geofences may for instance be a virtual perimeter of a real-world geographical area. Entering or exiting the perimeter by the electronic device according to the second exemplary aspect of the present invention may for instance trigger at least one (e.g. pre-defined) action respectively geofence action. Triggering of at least one action may for instance also be referred to as geofencing. Such geofencing, as used herein, may for instance refer to (an act of) triggering at least one (e.g. pre-defined) action when a respective electronic device (e.g. the electronic device) enters or exits a geofence perimeter, e.g. physically moves into or out of a defined geographical area. For instance, a geofence may be set around an area-of-interest or, if the geofence is of type line, the geofence may define a kind of border, e.g. a country border or any other well-suited border.

The respective apparatus and/or electronic device performing and/or controlling the method according to the first and/or second exemplary aspects of the present invention may be enabled for supporting of a non-GNSS based radio positioning system. This may be understood to mean that the electronic device performing and/or controlling the method according to the second exemplary aspect of the present invention is configured to estimate (e.g. determine) or to cause estimating (e.g. determining) whether or not it is located within the area of a respective geofence of the set of geofences, e.g. at least partially based on a (e.g. gathered) radio scan, e.g. comprising or representing radio signal parameters of one or more radio signals (e.g. one or more terrestrial radio signals) obtained at a current position (e.g. obtained as a scanning result of scanning for observable radio signals at this position) of the apparatus. Further, the electronic device may for instance request a respective location information (e.g. a location estimate) to be determined based on the gathered radio scan (e.g. comprised by or represented by a fingerprint information), so that it may for instance receive the respective location information from the apparatus (e.g. server or server cloud) performing and/or controlling the method according to the first exemplary aspect of the present invention. The latter case may for instance be performed and/or controlled for the other part of the geofences set of geofences that is not provided to the electronic device, wherein the electronic device may for instance not be enabled to determine whether or not it is located within the area of one or more geofences, thus not evaluate the respective geofences of the set of geofences since the respective geofences were not provided to the electronic device. Of course, the respective apparatus and/or electronic device performing and/or controlling the method according to the first and/or second exemplary aspects of the present invention may be enabled for supporting of a GNSS based radio positioning system.

Evaluating of a respective geofence of the set of geofences may for instance be understood to mean that a location estimate is determined by the respective apparatus (server or server cloud, electronic device) according to all exemplary aspects of the present invention. Thus, the electronic device may for instance be configured to estimate (e.g. determine) - in case the evaluating of a respective geofence is performed and/or controlled by the electronic device itself - or to cause estimating (e.g. determining) - in case the evaluating of a respective geofence is performed and/or controlled by the server or server cloud - a position at which the electronic device is located. The position may for instance be determined (e.g. estimated) at least partially based on a non-GNSS-based positioning system or GNSS-based positioning system.

The set of geofences, or a part of it, may for instance be stored in a memory, e.g. comprising a database. Such a memory may for instance be comprised by or be connectable to the apparatus performing and/or controlling the method according to the first exemplary aspect of the present invention, and/or the electronic device performing and/or controlling the method according to the second exemplary aspect of the present invention.

A respective geofence of at least the part of the set of geofences that is provided to the electronic device may for instance be associated with or be indicative of an area, wherein the electronic device is enabled to determine (e.g. estimate) whether or not it is located within the area. The area may for instance be a geographical area, e.g. a two-dimensional geographical area.

The set of geofences may for instance be obtained by receiving the set of geofences. For instance, the set of geofences may for instance be received from another entity which has stored the set of geofences for the electronic device prior to the obtaining. Alternatively, the set of geofences may for instance be received from another entity, which relays the set of geofences to the apparatus (e.g. server or server cloud) performing and/or controlling the method according to the first exemplary aspect of the present invention.

Additionally or alternatively, the set of geofences may for instance be obtained by user input. For instance, a user may enter one or more geofences, e.g. by defining the respective geofence (e.g. defining the respective perimeter of the respective geofence of the set of geofences, and optionally one or more actions which should be triggered in case e.g. the electronic device enters or exits the respective geofence, to name but a few non-limiting examples). After the set of geofences is obtained, optionally, the set of geofences may for instance be stored, e.g. in a memory as disclosed above.

The one or more pieces of priority information may for instance be associated with one or more geofences comprised by the set of geofences. The one or more pieces of priority information may for instance be determined at least partially based on a prioritization of the respective one or more geofences comprised by the set of geofences. Thus, e.g. an important geofence may for instance be associated with a respective priority information of the one or more pieces of priority information that is indicative of a high (er) priority. The one or more pieces of priority information may for instance be used in such a way that one or more geofence of the set of geofences with a respective priority information indicative of a high(er) prioritization are provided to the electronic device. Further, other one or more geofences e.g. associated with a respective priority information of the one or more pieces of priority information indicative of an intermediate, or low(er) prioritization may for instance not be provided to the electronic device. One or more geofences of the set of geofences that are provided to the electronic device are evaluated by the electronic device. In contrast, one or more geofences of the set of geofences that are not provided to the electronic device are not evaluated by the electronic device. When a respective geofence is evaluated by the electronic device, at least one action triggered by the respective geofence is triggered faster (e.g. in real-time) than when a respective geofence is evaluated by the apparatus performing and/or controlling the method according to the first exemplary aspect of the present invention (and, thus, not by the electronic device).

The one or more pieces of priority information may for instance be determined by user input. For instance, a user may for instance define which one or more geofences of the set of geofences have a high(er) prioritization than one or more other geofences of the set of geofences. The one or more pieces of priority information may for instance be determined at least partially based on a pre-defined or defined according to pre-defined rules prioritization, e.g. defined by user input.

According to or based on the one or more pieces of priority information, at least the part of the set of geofences may for instance be formed. This part of the set of geofences is provided (e.g. to the electronic device). Further, according to or based on the one or more pieces of priority information, at least the other part of the set of geofences may for instance be formed. This part of the set of geofences is not provided (e.g. to the electronic device).

At least the part of the set of geofences may for instance be provided by outputting (e.g. sending) at the least the part of the set of geofences, e.g. via communication interface(s) enabling communication between the apparatus (e.g. server or server cloud) performing and/or controlling the method according to the first exemplary aspect of the present invention and the electronic device performing and/or controlling the method according to the second exemplary aspect of the present invention. Such communication interface(s) may for instance be comprised by or connectable to the apparatus (e.g. server or server cloud) performing and/or controlling the method according to the first exemplary aspect of the present invention and/or the electronic device performing and/or controlling the method according to the second exemplary aspect of the present invention.

Alternatively, the apparatus (e.g. server or server cloud) performing and/or controlling the method according to the first exemplary aspect of the present invention may for instance provide at least the part of the set of geofences by outputting (e.g. sending) at least the part of the set of geofences to another entity that is different from the electronic device performing and/or controlling the method according to the second exemplary aspect of the present invention, and/or to one or more components responsible for a cloud-based positioning in a location-based service, and which transmits (e.g. relay) at least the part of the set of geofences to the electronic device.

At least the part of the set of geofences may for instance be provided to be utilized in offline geofencing by the electronic device (e.g. according to the second exemplary aspect of the present invention). It may for instance not be required for the electronic device to have established any kind of active communication connection when geofencing is performed and/or controlled (e.g. one or more geofences are evaluated by the electronic device). At least the part of the set of geofences may for instance be provided, e.g. by outputting (e.g. sending) the proximity geofence via a push method and/or by outputting it via an Application Programming Interface (API) to the electronic device performing and/or controlling the method according to the second exemplary aspect of the present invention.

According to an exemplary embodiment of the first exemplary aspect of the present invention, the method further comprises:
- evaluating at least the other part of the set of geofences that is not provided to the electronic device; and
- triggering at least one action at least partially based on a result of the evaluating.

The evaluating of at least the other part of the set of geofences may for instance comprise evaluating (e.g. all of) the one or more geofences that are comprised by at least the other part of the set of geofences. The evaluating of a geofence may for instance comprise assessing, if the electronic device is within respective geofence boundaries of a respective geofence of at least the other part of the set of geofences. This may for instance further comprise respectively require a checking, if an estimated location (e.g. represented by a location estimate) of the electronic device is inside the geographical boundaries defined by the respective geofence.

In case the electronic device is inside the geographical boundaries defined by a respective geofence, at least one respective (e.g. geofence) action may for instance be triggered (e.g. executed by the electronic device). The at least one action may for instance be triggered in case the electronic device moves into the respective area (e.g. enters) or moves out of the respective area (e.g. exits) of (e.g. as defined by) the respective geofence. Whether or not the electronic device exits or enters the respective area of a respective geofence of the other part of the set of geofences (not provided to the electronic device), thus e.g. crosses the respective geofence, may be determined by the apparatus performing and/or controlling the method according to the first exemplary aspect of the present invention.

The features disclosed above with respect to the at least one action equally apply to the triggering of at least one action that is performed and/or controlled by the method according to the second exemplary aspect of the present invention.

According to an exemplary embodiment of the first exemplary aspect of the present invention, the evaluating further comprises:
- obtaining (e.g. receiving) or determining a location information indicative of a position of the electronic device (e.g. from the electronic device); and
- assessing whether or not the electronic device is located within one or more boundaries as defined by each respective geofence of the other part of the set of geofences for the electronic device.

The position (or location) of the electronic device may for instance be determined (e.g. estimated or calculated). The position may for instance be comprised by or represented by the location information. Such a location information may for instance be obtained (e.g. received) a plurality of times, e.g. a respective (e.g. updated or new) location information is obtained again and again after an elapsed time interval (also referred to as location update interval).

Such a location update interval, e.g. associated with the electronic device, may define a frequency indicating how often the position of the electronic device is estimated in a pre-defined time period or indicating the time period between two subsequent position estimations represented by respective location information of the electronic device. For instance, the location update interval associated with the electronic device may represent a mean interval between two consecutive location update instants. As a non-limiting example, the location update interval may indicate how frequently the position of the electronic device is estimated, e.g. in terms a time interval between two consecutive estimations of the mobile device.

Furthermore and optionally, a respective determined location information may for instance be output, e.g. to the entity from which e.g. an obtained request (e.g. of the at least one electronic device according to the second exemplary aspect of the present invention) stems, or to another entity that is different from the entity from which the obtained request stems, and which transmits (e.g. relays) the location information to the entity from which the obtained request stems. The location information may for instance be output via the communication interface(s) of the apparatus performing and/or controlling the method according to the first exemplary aspect of the present invention.

For instance, the electronic device may be part of and/or may be moved by a movable entity, wherein the movable entity may be a vehicle, e.g. a car or a truck or a motorbike or a freighter or any other suitable vehicle, or a bike or a person that carries the electronic device and may walk around. The electronic device may be configured to determine its position (e.g. its location). As an example, the electronic device may comprise means for determining the position of the electronic device, e.g. based on signals received from at least one GNSS satellite system, for example based on signals received from Global Positioning System (GPS) satellites, from BeiDou satellites, from GLONASS satellites or from Galileo satellites or other satellites, to name but a few non-limiting examples. As an example, the electronic device may comprise a GNSS receiver in order to receive signals from the GNSS system such that electronic device of the at least one electronic device can estimate its location based on the GNSS signals. And/or, as an example, the electronic device may comprise a cellular and/or Wi-Fi and/or Bluetooth receiver in order to receive signals from at least one cellular system, and/or from at least one Wi-Fi system and/or from at least one Bluetooth system.

For instance, the means for determining the position may comprise means for estimating the position based on the received GNSS signals, and/or on the received cellular signals, and/or on the received Wi-Fi signals, and/or on the received Bluetooth signals, i.e., in this case the electronic device may be considered to have own positioning capabilities. Thus, the electronic device may be configured to make measurements of the radio environment, e.g. measurements of the cellular signals and/or of the Wi-Fi signals and/or measurements of the Bluetooth signals (e.g. represented by a fingerprint information) and which can be used by the electronic device to estimate the position of electronic device. And/or, for instance, the electronic device may be configured to make measurements of the radio environment, e.g. measurements of the cellular signals and/or of the Wi-Fi signals and/or measurements of the Bluetooth signals, and may be configured to transmit at least a part of the measurements to a cloud or server, e.g. via a wireless connection, such that the cloud or the server may estimate the electronic device's position based on the measurements received from the electronic device. Then, for instance, the cloud or the server may be configured to transmit the estimated position to the electronic device.

For instance, each time a respective location information is obtained (e.g. received), it may for instance be assessed whether or not the position as represented by the respective location information represents a position within the boundaries of a respective geofence (of at least the other part of the set of geofences). Then, in case the position is within respective boundaries of a respective geofence, at least one action can be triggered (e.g. by the apparatus performing and/or controlling the method according to the first exemplary aspect of the present invention), as disclosed above.

According to an exemplary embodiment of all exemplary aspects of the present invention, each geofence of the set of geofences is defined by one or more parameters, wherein at least one parameter of the one or more parameters is indicative of geographical boundaries bordering an (e.g. geographical) area.

As an example, the boundaries of a respective geofence may be defined by a point and a geometric shape around the point, e.g. a circle or an ellipse around the point. Or, as another example, a geofence may be defined by a polygon, wherein a polygon may be defined by a predefined set of boundaries. Thus, as example, the area of a geofence and/or the shape of a geofence may be defined by one of:
- a polygon;
- a rectangle and/or a square;
- a cuboid and/or a cube;
- an ellipse and/or a circle; and
- an ellipsoid and/or a sphere.

Furthermore, as an example, if the geofence is of type line, the line of the geofence may be defined by one of
- a polygon, and/or
- a straight line (e.g.), and/or
- a curve.

A respective geofence may be considered to define an area-of-interest at and/or around a specific location. For instance, a geofence could be a check point or a check area on the delivery route of a vehicle, e.g. a truck (or any movable mobile device), and somebody could be interested to know and get a notification when the delivery vehicle visits the check point (or check are), which could for example be one of the delivery locations (areas). Of course, a geofence could be used for any other well-suited area-of-interest, e.g. a school attendance zone or any other zone.

Or, as another example, if the geofence is of type line, the geofence may be considered to define a border such that it could be checked whether somebody (e.g. an asset, e.g. a vehicle or truck or any movable device) moves over the border being defined by the geofence. For instance, the border may be a country border and thus it can be checked whether an asset has moved over the country border.

The borders of the area of a respective geofence may for instance be of any size and shape. The borders of the area may for instance encircle an (e.g. geographical) area. The borders may for instance be one or more line segments closing in a loop to form a closed shape. The borders forming a closed shape may for instance represent a geofence. Such a geofence may for instance enable comparing a position to the borders of the area, so that it may for instance be determined whether or not the position is inside or outside of the area surrounded by the geofence. Additionally or alternatively, such a geofence may for instance enable comparing a series of positions (e.g. a tracking of positions) to the borders of the area, so that it may for instance be determined whether or not an electronic device (e.g. the electronic device) has exited or entered the area surrounded by the respective geofence.

The one or more parameters of a respective geofence may for instance represent the area of a geofence and/or the shape of the respective geofence, as disclosed above.

Further, the one or more parameters may for instance represent at least one action that may for instance be triggered, e.g. in case the electronic device moves in or moves out of the boundaries of a respective geofence.

According to an exemplary embodiment of all exemplary aspects of the present invention, the one or more pieces of priority information are determined based on a type of a respective geofence of the set of geofences.

According to an exemplary embodiment of all exemplary aspects of the present invention, the type of a respective geofence is one of the following:
i) immediate geofence;
ii) intermediate geofence;
iii) not time critical geofence.

Types i) to iii) may for instance define different types of geofences which may be part of the set of geofences.

Type i) geofences may for instance be represented by main logistics centers (e.g. as represented by a type i) immediate geofence, to name but one non-limiting example. Such type i) geofences may for instance require immediate triggering of at least one action in case an electronic device has moved into or out of the respective geofences of type i) comprised by the set of geofences.

Type ii) geofences may for instance be represented by intermediate warehouses (e.g. as represented by a type ii) intermediate geofence, to name but one non-limiting example. Such type ii) geofences may for instance not require immediate triggering of at least one action, but may for instance require triggering of at least one action e.g. with a delay being acceptable.

Type iii) geofences may for instance be represented by check points along a transportation path (e.g. as represented by a type iii) not time critical geofences), to name but one non-limiting example. Such type iii) geofences may for instance not be time critical at all. It may for instance be acceptable even if no action is triggered when an electronic device has moved into (or out of) the respective geofence. If at least one action is triggered by such a type iii) geofences, the at least one action may for instance be triggered with a (e.g. massive) delay (e.g. up to one day or more delay of time).

Type i) geofences(s) may for instance have a higher prioritization than type ii) and type iii) geofences in this particular descending order.

It may, for example, be that a logistics control system requires immediate information, when an asset (e.g. having or comprising the electronic device according to the second exemplary aspect of the present invention) arrives (e.g. moves in to a respective type i) geofences). In contrast, whether or not the respective electronic device has passed one or more check points along a transportation path (e.g. represented by one or more type iii) geofences comprised by the set of geofences) may for instance not be required as an immediate information, e.g. by the logistics control system, since type iii) geofences may for instance not be time critical.

Thus, a respective type i) geofence may for instance have a priority information that may for instance be associated with the respective type i) geofence of the set of geofences, wherein the respective priority information is indicative of the highest priority. Thus, the respective type i) geofence may for instance be considered to have the highest priority. In contrast, a type ii) or type iii) geofence of the set of geofences may for instance be noticed with delay. Further, a respective type ii) geofence may for instance have a priority information that may for instance be associated with the respective type ii) geofence of the set of geofences, wherein the respective priority information is indicative of an intermediate priority. Thus, the respective type ii) geofence may for instance be considered to have an intermediate priority. Further, a respective type iii) geofence may for instance have a priority information that may for instance be associated with the respective type iii) geofence of the set of geofences, wherein the respective priority information is indicative of the lowest priority. Thus, the respective type iii) geofence may for instance be considered to have the lowest priority.

According to an exemplary embodiment of the first exemplary aspect of the present invention, at least the part of the set of geofences which respective priority information comprises or represents the type i) is provided.

For instance, at least the part of the set of geofences that is provided to the electronic device may for instance comprise all type i) geofences and/or some of type ii) geofences that are comprised or part of the set of geofences for the electronic device. Further, the rest of the type ii) geofences and/or all of the type iii) geofences that are also part of the set of geofences (e.g. comprised by at least the other part of the set of geofences) may for instance not be provided to the respective electronic device. At least the other part of the set of geofences may for instance be kept (e.g. stored) by the apparatus (e.g. the server or server cloud) performing and/or controlling the method according to the first exemplary aspect of the present invention.

According to an exemplary embodiment of all exemplary aspects of the present invention, the electronic device is a low-capability device.

The electronic device may for instance be portable (e.g. weigh less than 1, 0.5, 0.4, 0.2, or 0.1 kg). The electronic device may for instance be a limited capability device, e.g. such as an IoT-device, or a tracker. The electronic device may for instance comprise or be connectable to one or more sensors for determining the devices position, such as for instance a magnetic field receiver. The electronic device may for instance comprise or be connectable to one or more sensors, e.g. in the form of an accelerometer and/or a gyroscope for gathering (e.g. measuring) further information (e.g. radio measurements). The electronic device may for instance comprise or be connectable to a receiver and/or a transmitter (e.g. a transceiver) for receiving and/or sending data and/or information. For instance, the electronic device may comprise one or more radio receivers (e.g. radio transceivers, e.g. cellular radio transceivers), which may for instance enable the method according to the second exemplary aspect of the present invention to be performed and/or controlled. The electronic device may for instance be suitable for outdoor and/or indoor navigation respectively positioning. The electronic device may for instance comprise or be connectable to means for storing information, e.g. a memory for storing at least the part of the set of geofences. In particular, the electronic device may for instance comprise the means for storing (e.g. only) type i) and/or type ii) geofences, which enable the electronic device to perform and/or control offline positioning, e.g. evaluating the stored geofences. The means for storing may for instance be limited to storing just (a) geofence(s) that are comprised or represented by at least the part of the set of geofences that is/was provided to the electronic device.

The method according to the second exemplary aspect of the present invention is performed and/or controlled by at least one electronic device, e.g. the electronic device to which the method according to the first exemplary aspect of the present invention may for instance provide at least the part of the set of geofences. The method according to the second exemplary aspect of the present invention may for instance also be performed and/or controlled by more than one electronic device, e.g. a plurality of electronic device (e.g. at least two electronic devices).

At least the part of the set of geofences that is provided according to the method of the first exemplary aspect of the present invention is obtained by the at least one electronic device performing and/or controlling the method according to the second exemplary aspect of the present invention. At least the part of the set of geofences may for instance be obtained by receiving at least the part of the set of geofences, e.g. from the apparatus of the first exemplary aspect of the present invention. Alternatively, at least the part of the set of geofences may for instance be obtained by receiving at least the part of the set of geofences from an entity that is different from the apparatus of the first exemplary aspect of the present invention, which may for instance relay at least the part of the set of geofences upon reception to the at least one electronic device.

The evaluating of at least the part of the set of geofences obtained by the electronic device may for instance comprise evaluating (e.g. all of) the one or more geofences that are comprised by at least the part of the set of geofences. The evaluating of a geofence may for instance comprise assessing, if the electronic device is within the respective geofence boundaries of the respective geofence of at least the part of the set of geofences. This may for instance further comprise respectively require a checking, if an estimated location (e.g. represented by a location estimate) of the electronic device is inside the geographical boundaries defined by the respective geofence.

In case e.g. the at least one electronic device performing and/or controlling the method according to the second exemplary aspect of the present invention enters or exits an area of a respective geofence of at least the part of the set of geofences, and/or of at least the other part of the set of geofences (e.g. enters or exits a respective geofence respectively boundaries of a respective geofence), the apparatus performing and/or controlling the method according to the first exemplary aspect of the present invention may for instance receive at least one action which was triggered by the at least one electronic device performing and/or controlling the method according to the second exemplary aspect of the present invention. In case that the electronic device enters or exits an area of a respective geofence of at least the other part of the set of geofences may for instance be determined by the apparatus performing and/or controlling the method according to the first exemplary aspect of the present invention e.g. based on a location information obtained from the electronic device.

Such a received at least one action may for instance comprise or represent a request to assist the at least one electronic device, e.g. requesting a status update to be registered by a logistics center system, and/or to send a notification to the apparatus performing and/or controlling the method according to the first exemplary aspect of the present invention, or to another apparatus, or the like, to name but a few non-limiting examples.

According to an exemplary embodiment of the second exemplary aspect of the present invention, the evaluating further comprises:
- determining or obtaining (e.g. receiving) a location information indicative of a position of the at least one electronic device; and
- assessing whether or not the at least one electronic device is located within one or more boundaries as defined by each respective geofence of at least the part of the set of geofences.

The location information may for instance be determined, e.g. by the at least electronic device itself. Alternatively, the location information may for instance be obtained (e.g. received) by the at least one electronic device, e.g. based on a request for determining such a location information that is sent by the at least one electronic device (e.g. to the apparatus according to the first exemplary aspect of the present invention) prior to the obtaining. The location information may for instance be obtained by receiving the location information as a response to such a request sent by the at least one electronic device. To determine or obtain the location information, the at least one electronic device may for instance gather (e.g. measure) a fingerprint information at a (e.g. current) position at which the at least one electronic device is located. The fingerprint information may for instance be utilized to determine the position of the at least one electronic device.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention;
- Fig. 3: a flowchart showing an example embodiment of a method according to the second exemplary aspect of the present invention;
- Fig. 4: a schematic block diagram of an apparatus configured to perform the method according to the first exemplary aspect of the present invention; and
- Fig. 5: a schematic block diagram of an apparatus configured to perform the method according to the second exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

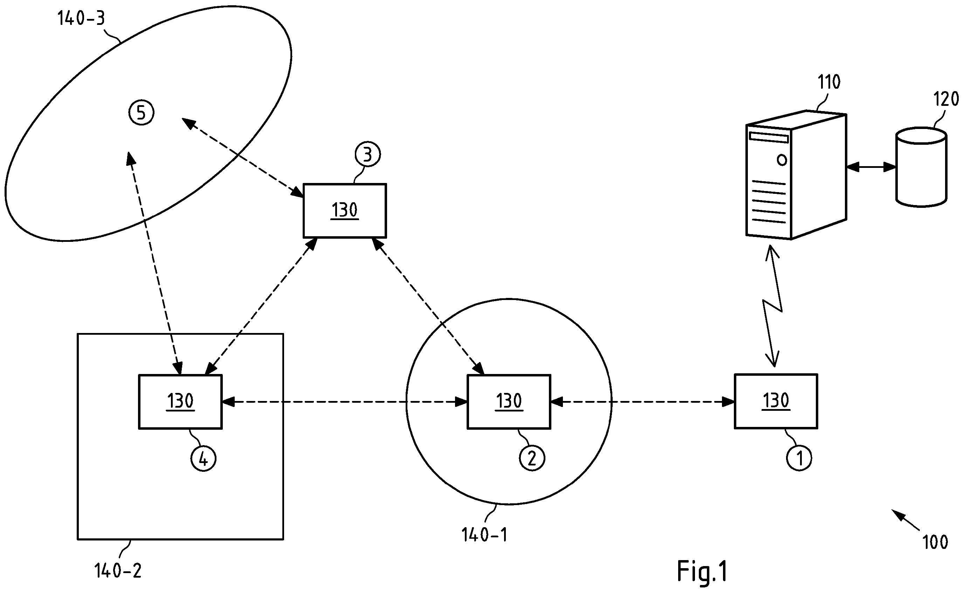

Fig. 1 is a schematic high-level block diagram of a system 100 according to an exemplary aspect of the present invention. Such a system 100 may for instance represent a generic system architecture as used by one or more exemplary embodiments according to all exemplary aspects of the present invention.

System 100 comprises a server 110, an optional database 120, and at least one electronic device (in particular a low capability device, or an IoT device, or a tracker) 130. Further, in Fig. 1 geofences 140-1, 140-2, 140-3 are shown, which illustrate respective (geographic) areas with one or more boundaries. The boundaries of the 140-1, 140-2, 140-3 are of different shape to exemplary show that different shape of geofence boundaries can be realized.

The electronic device 130 may for instance be movable. The electronic device 130 may for instance move in and out of the boundaries of the geofences 140-1, 140-2, 140-3. Exemplary positions of the electronic device 130 are illustrated by the encircled numbers 1 to 5. The respective positions indicated by the encircled numbers 1 to 5 of the electronic device 130 are exemplary positions. Of course, the electronic device 130 may move into any possible position.

The respective geofences 140-1, 140-2, 140-3 have one or more boundaries in different shapes. A respective geofences may for instance be defined in any shape that is required. Furthermore, it is schematically illustrated that electronic device 130 can move out of the geofences 140-1, 140-2, 140-3 and move back into a respective geofences 140-1, 140-2, 140-3, which is illustrated by the dotted double arrows between the illustrated instances of the electronic device 130.

Each of the respective geofences 140-1, 140-2, 140-3 covers a respective geographical area, e.g. of the perimeter of the respective geofence.

The server 110 may alternatively be embodied as a server cloud (e.g. a plurality of server connected, e.g. via a communication network such as the Internet, and providing services at least partially jointly. The server 110, which may for instance be embodied as a positioning server, may for instance be further configured to provide at least a part of a set of geofences to the electronic device 130. Further, the server 110 may for instance be configured to evaluate one or more geofences of the set of geofences that were not provided to the electronic device 130.

The database 120 may for instance be optional. The database 120 may for instance comprise a memory, e.g. for storing one or more sets of geofences, one or more pieces of priority information, one or more parameters of one or more geofences, one or more location information, one or more results of assessing whether an electronic device is located within one or more boundaries as defined by a respective geofence, one or more action, or a combination thereof, to name but a few non-limiting examples.

At least a part of a set of geofences (e.g. associated with respective pieces of priority information comprising or representing a "high" prioritization) may for instance be provided from server 110 to the electronic device 130, e.g. after at least the part of the set of geofences is chosen (e.g. at least partially based on determined one or more pieces of priority information by server 110), wherein at least the part of the set of geofences may for instance be stored (at least temporarily) in the database 120 comprised by or connectable to server 110) to the electronic device 130.

The system 100 may for instance enable the following example embodiment according to all aspects of the present invention:
A method according to all aspects of the present invention may for instance enable to prioritize one or more geofences (e.g. comprised or represented by the set of geofences) for the client-side (e.g. electronic device according to the second exemplary aspect of the present invention) evaluation, wherein geofences are provided to the client, e.g. in the form of a tracker (e.g. the electronic device, or the electronic device 130) in the priority order (e.g. as comprised or represented by the one or more pieces of priority information), e.g. until the tracker quota is maxed.

A (e.g. tracking) system according to example embodiments of all aspects of the present invention may for instance have a great number of geofences (e.g. several hundreds to thousands of geofences for a certain electronic device respectively tracker). Different geofence types may e.g.:
A. Main logistics centers (e.g. as represented by a type i) immediate geofence;
B. Intermediate warehouses (e.g. as represented by a type ii) intermediate geofences);
C. Check points along the transportation paths (e.g. as represented by a type iii) not time critical geofences.

Type i) geofences(s) may for instance have a higher prioritization than type ii) and type iii) geofences in this particular descending order.

It may, for example, be that a logistics control system requires immediate information, when an asset (e.g. having or comprising the electronic device (e.g. the electronic device 130) according to the second exemplary aspect of the present invention) arrives at a logistics center (A; e.g. geofence 140-2), but the check points (C; e.g. geofence 140-3) are not time critical. Therefore, it seems that architecturally geofences (A) should be evaluated by the client (e.g. the electronic device 130, e.g. in the form of a tracker), while geofences (C) may for instance be evaluated by the server side (as represented by the apparatus (e.g. server 110) according to the first exemplary aspect of the present invention).

Thus, by the disclosed invention, the geofence (A) shall have the highest priority. They shall be evaluated by the tracker, e.g. resulting in immediate triggering of the geofence condition respectively action, e.g. when an asset having or comprising the electronic device 130 arrives at the logistics center. Geofences (C) may for instance be noticed with delay so they are okay to be evaluated by the server or cloud (or not at all). Thus, geofences (C) may for instance be given the lowest priority.

A practical implementation of geofence prioritization is that when an electronic device (e.g. tracker) may for instance request a set of geofences from the server or cloud (performing and/or controlling the method according to the first exemplary aspect of the present invention), the electronic device tells a server or cloud API a maximum number of geofences either in terms of geofence count or bytes. The API then provides an appropriate number of geofences comprised or represented by at least the part of the set of geofences, in priority order, until the max. number respectively bytes storable by the respective electronic device is met. In the example, it may for instance happen that all the geofences (A) and some of the geofences (B, e.g. geofence 140-1) are carried (e.g. provided) to the respective electronic device, but the rest of the geofences (B) and all of the geofences (C) that are also part of the set of geofences may for instance not be carried (e.g. provided) to the respective electronic device.

In an example embodiment according to all exemplary aspects of the present invention, a system operator may then for instance further decide, if the left-out geofences of the set of geofences that were not provided to the electronic device shall not be evaluated at all or whether they are evaluated by the server-side, to name but a few non-limiting examples. Thus, it is enabled that important geofences are (e.g. always) evaluated on the client-side (e.g. not missed), and not so important geofences of the set of geofences can optionally be evaluated on the server- or cloud-side. In this way, power consumption of trackers is minimized while maintaining accurate real-time tracking of important points throughout the logistic chain.

The electronic device 130 may for instance be configured to perform and/or control the method according to the second exemplary aspect of the present invention. The server 110 may for instance be configured to perform and/or control the method according to the first exemplary aspect of the present invention.

This approach enables that at least a part of the set of geofences is evaluated by the server 110 performing and/or controlling the method according to the first exemplary aspect of the present invention. The evaluation of another part of the set of geofences is enabled by the electronic device 130 performing and/or controlling the method according to the second exemplary aspect of the present invention. It is enabled to evaluate a plurality of geofences comprised or represented by the set of geofences while reducing or minimizing power consumption of the electronic device 130, since the electronic device 130 evaluates only a part of the set of geofences which were determined to have a higher prioritization than another part of the (same) set of geofences that are evaluated by the server 110.

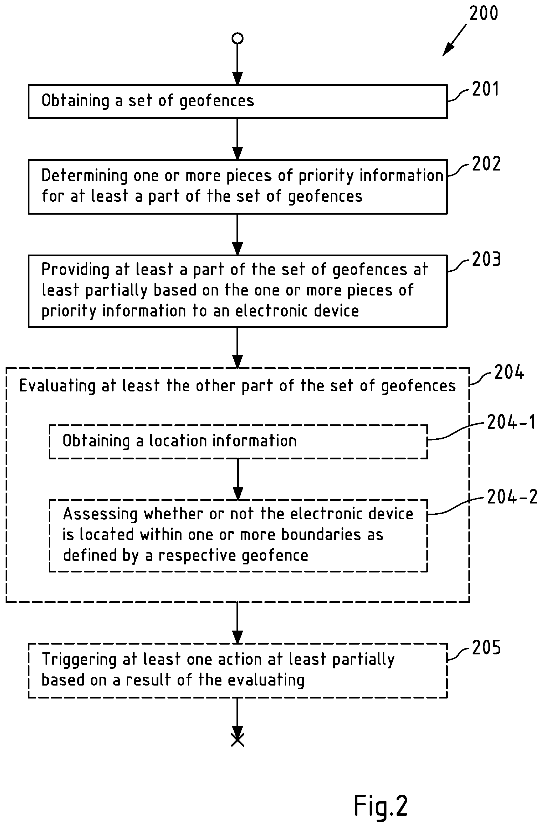

Fig. 2 is a flowchart 200 showing an example embodiment of a method according to the first exemplary aspect of the present invention. This flowchart 200 may for instance be performed by a server or a server cloud, e.g. server 110 of Fig. 1.

In a first step 201, a set of geofences is obtained. The set of geofences may for instance be obtained by receiving the set of geofences, e.g. from a third party which may for instance have defined the set of geofences for a certain electronic device (e.g. electronic device 130 of Fig. 1). Alternatively or additionally, the set of geofences may for instance be obtained, e.g. by user input. For instance, user input may for instance define the set of geofences for the certain electronic device 130.

In a second step 202, one or more pieces of priority information are determined. The one or more pieces of priority information may for instance be determined by the server 110 of Fig. 1. The one or more pieces of priority information may for instance represent or comprise a prioritization of one or more geofences comprised or represented by the set of geofences. For instance, at least a part of the set of geofences may for instance comprise or represent geofences that are considered to have a higher priority than some other geofences of the set of geofences. Such geofences may for instance be geofences which are connected to time critical information. Thus, a corresponding priority information indicative of a high (e.g. type i) geofences, or intermediate priority (e.g. type ii) geofences may for instance be determined. Some other geofences may for instance be related to non-time critical information (e.g. type iii) geofences. Thus, a corresponding priority information indicative of a low(er) priority may for instance be determined.

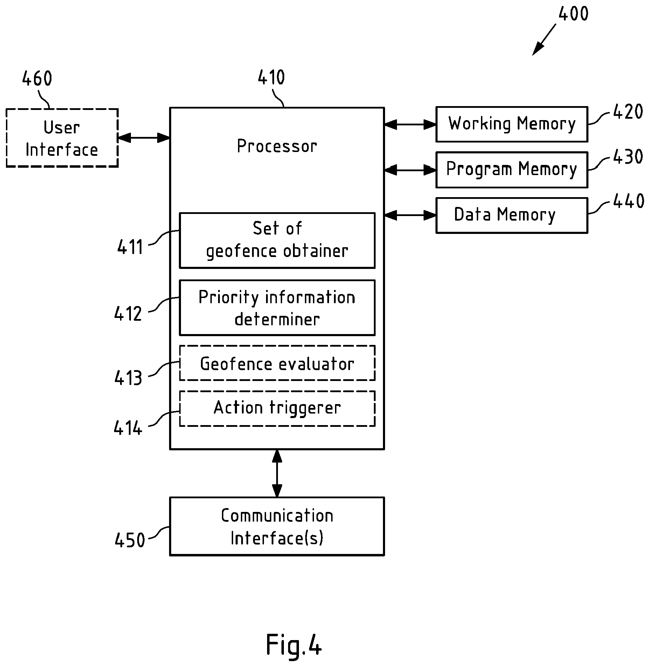

In a third step, at least the part comprising one or more geofences of the set of geofences, which may for instance be associated with a "high" or "intermediate" priority, as disclosed above with respect to step 202, are provided to an electronic device (e.g. electronic device 130 of Fig. 1). This part of the set of geofences may for instance be provided, e.g. by outputting (e.g. sending) at least the part of the set of geofences to the electronic device, e.g. via a communication interface (e.g. communication interface(s) 450 of Fig. 4 in case the flowchart 200 is performed and/or controlled by apparatus 400 of Fig. 4).

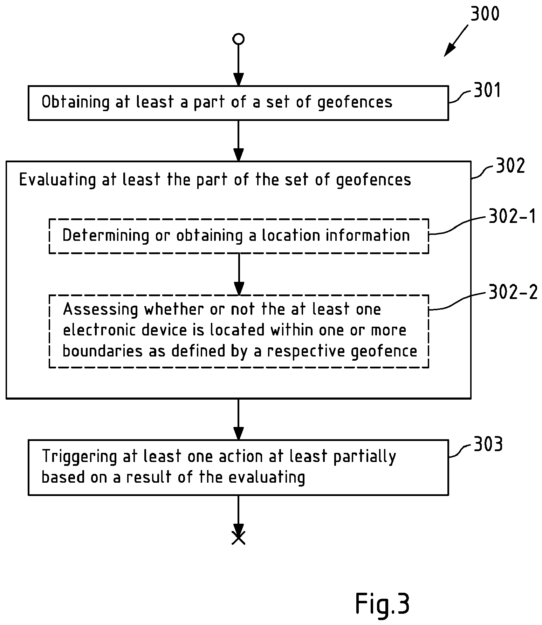

In an optional fourth step 204, at least the other part of the set of geofences (that were not provided to the electronic device 130 of Fig. 1 in step 203) is evaluated on part of the server (e.g. server 110 of Fig. 1) performing and/or controlling the flowchart 200. Thus, the part of the set of geofences that are provided to the electronic device may for instance be evaluated by the electronic device itself (see step 302 of Fig. 3). The other part of the set of geofences that was not provided to the electronic device in step 203 may for instance be evaluated by the server.

Evaluation of (a) respective geofence(s) (e.g. at least the other part of the set of geofences comprising one or more geofences that were defined for the electronic device and that was not provided to the electronic device 130 of Fig. 1) may for instance comprise the optional step 204-1 of obtaining (e.g. receiving) a location information indicative of a (e.g. rough) location estimate of the electronic device 130 of Fig. 1. Further, evaluation of (a) respective geofences(s) may for instance comprise the optional step 204-2 of assessing whether or not the electronic device is located within one or more boundaries as defined by a respective geofences, and/or as defined by at least the other part of geofences of the set of geofences (e.g. a plurality of geofences). Thus, it may for instance be assessed, if the electronic device 130 of Fig. 1 is within the geofence boundaries (e.g. geofences 140-1, 140-2, or 140-3 of Fig. 1). This assessing may for instance be performed and/or controlled by the server (e.g. server 110 of Fig. 1), and not by the electronic device (e.g. electronic device 130 of Fig. 1). The step 204-2 of assessing may for instance require checking, if the estimated location of the electronic device (e.g. electronic device 130 of Fig. 1) as comprised or represented by the location information of the electronic device is inside the geographical boundaries defined by the geofences that are comprised or represented by at least the other part of the set of geofences.

It will be understood that the step of evaluating (step 204) may for instance comprise any of the steps 204-1 to 204-2.

In an optional fifth step 205, at least one action is triggered at least partially based on a result or one or more results of the evaluating. For instance, in step 204 it may for instance be evaluated that the electronic device (e.g. electronic device 130 of Fig. 1) is located within the boundaries of a respective geofence. Since the electronic device 130 is located within such a geofence, a certain action may for instance be associated with the respective geofence of at least the other part of geofences of the set of geofences. For instance, a status update may for instance be sent to a third party service provider, e.g. another server (not shown in Fig. 1) to indicate that the electronic device 130 of Fig. 1 has reached a certain goal or location. For instance, such a geofence may for instance define a certain check point of a transportation route. The electronic device 130 of Fig. 1 may for instance be coupled to or be attached to some goods or physical product which should be transported by a logistics service provider to a destination address, to name but one non-limiting example. A certain action may for instance be triggered, by sending an information to an entity (e.g. a server) that then may for instance perform and/or control one or more actions that are associated with the respective geofence that has triggered the respective one or more actions. In the aforementioned example since the electronic device 130 of Fig. 1 may for instance have reached the certain check point, a respective action may for instance be triggered to indicate, e.g. in a database, that the electronic device 130 of Fig. 1 has reached or passed the respective check point as represented by the respective geofence.

Fig. 3 is a flowchart 300 showing an example embodiment of a method according to the second exemplary aspect of the present invention. This flowchart 300 may for instance be performed by an electronic device, e.g. a tracker. This flowchart 300 may for instance be performed by the electronic device 130 of Fig. 1.

In a first step 301, at least a part of a set of geofences is obtained, e.g. received from a server (e.g. server 110 of Fig. 1). The set of geofences may for instance be a plurality of geofences, which are all defined for an electronic device, e.g. the electronic device (e.g. electronic device 130) performing and/or controlling the flowchart 300. At least the part of the set of geofences may for instance be received directly from the server, e.g. via a communication network (e.g. the Internet, a cellular communication network, a combination thereof, to name but a few non-limiting examples). Additionally or alternatively, at least the part of the set of geofences may for instance be received from an entity that is different from the server 110 of Fig. 1, which relays at least the part of the set of geofences to the electronic device (e.g. electronic device 130) performing the flowchart 300.

In a second step 302, at least the part of the geofences is evaluated. Evaluation of (a) respective geofence(s) (e.g. at least the part of the set of geofences comprises one or more geofences that were defined for the electronic device performing and/or controlling the flowchart 300) may for instance comprise the optional step 302-1 of determining (e.g. calculating) or obtaining (e.g. requesting) a location information indicative of a (e.g. rough) location estimate of the electronic device performing and/or controlling the flowchart 300. Further, evaluation of (a) respective geofences(s) may for instance comprise the optional step 302-2 of assessing whether or not the electronic device (performing and/or controlling the flowchart 300) is located within one or more boundaries as defined by a respective geofences, and/or as defined by at least the part of geofences of the set of geofences (e.g. a plurality of geofences). Thus, it may for instance be assessed, if the electronic device 130 is within the geofence boundaries (e.g. geofences 140-1, 140-2, or 140-3 of Fig. 1). This may for instance require checking, if the estimated location as comprised or represented by the location information of the electronic device is inside the geographical boundaries defined by a respective geofence (e.g. geofence 140-2 of Fig. 1).

In a third step 303, at least one action is triggered at least partially based on a result or one or more results of the evaluating. For instance, in step 302 it may for instance be evaluated that the electronic device is located within the boundaries of a respective geofence (e.g. geofence 140-2 of Fig. 1). Since the electronic device is within this geofences 140-2 (e.g. a type i) geofence, a certain action may for instance be associated with the respective geofences of at least the part of geofences of the set of geofences. For instance, a status update may for instance be sent to a third party service provider, e.g. another server (not shown in Fig. 1), and/or to the server 110 of Fig. 1, to indicate that the electronic device has reached a certain goal or location, e.g. a main logistics center bordered by geofence 140-2 of Fig. 1. Thus, geofence 140-2 of Fig. 1 may for instance define a main logistics center, and electronic device 130 of Fig. 1 is coupled to or attached to a physical product which should be transported by a logistics service provider to a destination address, to name but one non-limiting example. A certain action may for instance be triggered, by sending an information to an entity (e.g. a server) that then may for instance perform and/or control one or more actions that are associated with the respective geofences that has triggered the respective action.

It will be understood that the step of evaluating (step 302) may for instance comprise any of the steps 302-1 to 302-2.

Fig. 4 is a schematic block diagram of an apparatus 400 according to an exemplary aspect of the present invention, which may for instance represent the server 110 of Fig. 1.

Apparatus 400 comprises a processor 410, working memory 420, program memory 430, data memory 440, communication interface(s) 450, and an optional user interface 460.

Apparatus 400 may for instance be configured to perform and/or control or comprise respective means (at least one of 410 to 460) for performing and/or controlling the method according to the first exemplary aspect of the present invention. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to the first exemplary aspect of the present invention.

Processor 410 may for instance comprise a set of geofence obtainer 411 as a functional and/or structural unit. Set of geofence obtainer 411 may for instance be configured to obtain a set of geofences (see step 201 of Fig. 2).

Processor 410 may for instance comprise a priority information determiner 412 as a functional and/or structural unit. Priority information determiner 412 may for instance be configured to determine one or more pieces of priority information (see step 202 of Fig. 2).

Processor 410 may for instance comprise an optional geofence evaluator 413 as a functional and/or structural unit. Optional geofence evaluator 413 may for instance be configured to evaluate one or more geofences (see step 204 of Fig. 2).

Processor 410 may for instance comprise an optional action triggerer 414 as a functional and/or structural unit. Optional action triggerer 414 may for instance be configured to trigger at least one action (see step 205 of Fig. 2).

Processor 410 may for instance further control the memories 420 to 440, the communication interface(s) 450, and the optional user interface 460.

Processor 410 may for instance execute computer program code stored in program memory 430, which may for instance represent a computer readable storage medium comprising program code that, when executed by processor 410, causes the processor 410 to perform the method according to the first exemplary aspect of the present invention.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more sets of geofences, one or more pieces of priority information, one or more parameters of one or more geofences, one or more location information, one or more results of assessing whether an electronic device is located within one or more boundaries as defined by a respective geofence, one or more action, or a combination thereof, to name but a few non-limiting examples.

Communication interface(s) 450 enable apparatus 400 to communicate with other entities, e.g. with electronic device 130 of Fig. 1. The communication interface(s) 450 may for instance comprise a wireless interface, e.g. a cellular radio communication interface and/or a WLAN interface and/or wire-bound interface, e.g. an IP-based interface, for instance to communicate with entities via the Internet.

User interface 460 is optional and may comprise a display for displaying information to a user and/or an input device (e.g. a keyboard, keypad, touchpad, mouse, etc.) for receiving information from a user.

Some or all of the components of the apparatus 400 may for instance be connected via a bus. Some or all of the components of the apparatus 400 may for instance be combined into one or more modules.

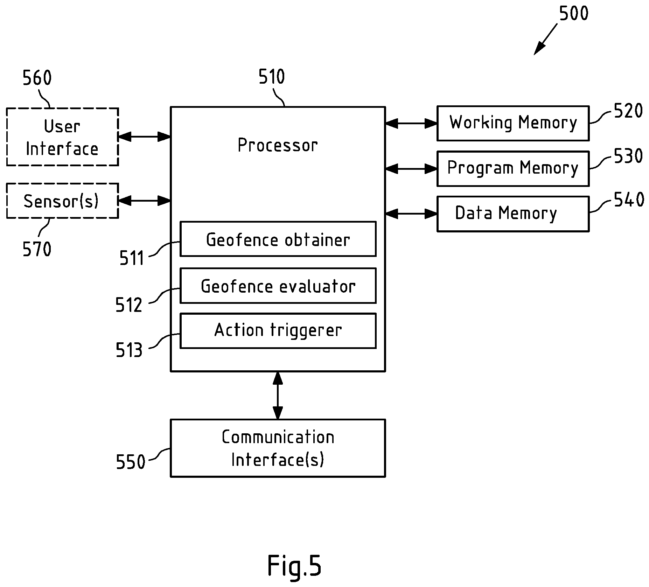

Fig. 5 is a schematic block diagram of an apparatus 500 according to an exemplary aspect of the present invention, which may for instance represent the electronic device 130 of Fig. 1.

Apparatus 500 comprises a processor 510, working memory 520, program memory 530, data memory 540, communication interface(s) 550, an optional user interface 560 and an optional sensor(s) 570.

Apparatus 500 may for instance be configured to perform and/or control or comprise respective means (at least one of 510 to 570) for performing and/or controlling the method according to the second exemplary aspect of the present invention. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the second exemplary aspect of the present invention.

Processor 510 may for instance comprise a geofence obtainer 511 as a functional and/or structural unit. Geofence obtainer 511 may for instance be configured to obtain one or more geofences, and/or one or more sets of geofences (see step 301 of Fig. 3).

Processor 510 may for instance comprise a geofence evaluator 512 as a functional and/or structural unit. Geofence evaluator 512 may for instance be configured to evaluate one or more geofences (see step 302 of Fig. 3).

Processor 510 may for instance comprise an action triggerer 513 as a functional and/or structural unit. Action triggerer 513 may for instance be configured to trigger one or more actions (see step 303 of Fig. 3).

Processor 510 may for instance further control the memories 520 to 540, the communication interface(s) 550, the optional user interface 560 and the optional sensor(s) 570.

Processor 510 may for instance execute computer program code stored in program memory 530, which may for instance represent a computer readable storage medium comprising program code that, when executed by processor 510, causes the processor 510 to perform the method according to the second exemplary aspect of the present invention.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more sets of geofences, one or more pieces of priority information, one or more parameters of one or more geofences, one or more location information, one or more results of assessing whether an electronic device is located within one or more boundaries as defined by a respective geofence, one or more action, or a combination thereof, to name but a few non-limiting examples.

Communication interface(s) 550 enable apparatus 500 to communicate with other entities, e.g. with server 110 of Fig. 1. The communication interface(s) 550 may for instance comprise a wireless interface, e.g. a cellular radio communication interface and/or a WLAN interface and/or wire-bound interface, e.g. an IP-based interface, for instance to communicate with entities via the Internet.

User interface 560 is optional and may comprise a display for displaying information to a user and/or an input device (e.g. a keyboard, keypad, touchpad, mouse, etc.) for receiving information from a user.

Sensor(s) 570 are optional and may for instance comprise a barometric sensor, e.g. to gather altitude information, a Global Navigation Satellite System (GNSS) sensor, e.g. in the form of a Global Positioning System (GPS) sensor, e.g. to gather location information indicative of a position of the apparatus 500, or the like, to name but a few non-limiting examples.

Some or all of the components of the apparatus 500 may for instance be connected via a bus. Some or all of the components of the apparatus 500 may for instance be combined into one or more modules.

### The following embodiments shall also be considered to be disclosed:

### Embodiment 1:

An apparatus comprising at least one processor and at least one memory including computer program code, the at least one memory and the computer program code configured to, with the at least one processor, cause the apparatus to at least perform:
- obtaining a set of geofences, wherein each geofence of the set of geofences defines a respective geofence for an electronic device;
- determining one or more pieces of priority information for at least a part of the set of geofences, wherein a respective priority information of the one or more pieces of priority information is indicative of a prioritization of a respective geofence of the set of geofences; and
- providing at least a part of the set of geofences at least partially based on the one or more pieces of priority information to the electronic device, wherein at least the part of the set of geofences that is provided is evaluated by an electronic device, and another part of the set of geofences that is not provided is not evaluated by the electronic device.

### Embodiment 2:

The apparatus according to embodiment 1, the at least one memory and the computer program code configured to, with the at least one processor, cause the apparatus further to perform:
- evaluating at least the other part of the set of geofences that is not provided to the electronic device; and
- triggering at least one action at least partially based on a result of the evaluating.

### Embodiment 3:

The apparatus according to embodiment 2, wherein the evaluating further comprises:
- obtaining or determining a location information indicative of a position of the electronic device; and
- assessing whether or not the electronic device is located within one or more boundaries as defined by each respective geofence of the other part of the set of geofences for the electronic device.

### Embodiment 4:

The apparatus according to any of the preceding embodiments, wherein each geofence of the set of geofences is defined by one or more parameters, wherein at least one parameter of the one or more parameters is indicative of geographical boundaries bordering an area.

### Embodiment 5:

The apparatus according to any of the preceding embodiments, wherein the one or more pieces of priority information are determined based on a type of a respective geofence of the set of geofences.

### Embodiment 6:

The apparatus according to embodiment 5, wherein the type of a respective geofence is one of the following:
i) immediate geofence;
ii) intermediate geofence;
iii) not time critical geofence.

### Embodiment 7:

The apparatus according to embodiment 6, wherein at least the part of the set of geofences which respective priority information comprises or represents the type i) is provided.

### Embodiment 8:

The apparatus according to any of the preceding claims, wherein the electronic device is a low-capability device.

### Embodiment 9:

An apparatus comprising at least one processor and at least one memory including computer program code, the at least one memory and the computer program code configured to, with the at least one processor, cause the apparatus to at least perform:
- obtaining at least a part of a set of geofences, wherein each geofence of the set of geofence defines a respective geofence for the at least one electronic device, wherein at least the part of the set of geofences is obtained at least partially based on one or more pieces of priority information, wherein a respective priority information of the one or more pieces of priority information is indicative of a prioritization of a respective geofence of the set of geofences;
- evaluating at least the part of the set of geofences; and
- triggering at least one action at least partially based on a result of the evaluating.

### Embodiment 10:

The apparatus according to embodiment 9, the at least one memory and the computer program code configured to, with the at least one processor, cause the apparatus further to perform:
- determining or obtaining a location information indicative of a position of the at least one electronic device; and
- assessing whether or not the at least one electronic device is located within one or more boundaries as defined by each respective geofence of at least the part of the set of geofences.

### Embodiment 11:

The apparatus according to embodiment 9 or embodiment 10, wherein each geofence of the set of geofences is defined by one or more parameters, wherein at least one parameter of the one or more parameters is indicative of geographical boundaries bordering an area.

### Embodiment 12:

The apparatus according to any of the embodiments 9 to 11, wherein the one or more pieces of priority information are further indicative of a type of a respective geofence of the set of geofences.

### Embodiment 13:

The apparatus according to embodiment 12, wherein the type of a respective geofence is one of the following:
i) immediate geofence;
ii) intermediate geofence;
iii) not time critical geofence.

### Embodiment 14:

The apparatus according to embodiment 13, wherein at least the part of the set of geofences that is obtained corresponds to or is associated with a respective priority information comprising or representing the type i).

### Embodiment 15:

The apparatus according to any of the embodiments 9 to 14, wherein the apparatus is a low-capability device.

### Embodiment 16:

An apparatus comprising at least one processor and at least one memory including computer program code, the at least one memory and the computer program code configured to, with the at least one processor, cause an apparatus at least to perform and/or control the method of any of the embodiments 1 to 8.

### Embodiment 17:

An apparatus comprising at least one processor and at least one memory including computer program code, the at least one memory and the computer program code configured to, with the at least one processor, cause an apparatus at least to perform and/or control the method of any of the embodiments 9 to 15.

### Embodiment 18:

A tangible computer-readable medium storing computer program code, the computer program code when executed by a processor causing an apparatus to perform and/or control:
- obtaining a set of geofences, wherein each geofence of the set of geofences defines a respective geofence for an electronic device;
- determining one or more pieces of priority information for at least a part of the set of geofences, wherein a respective priority information of the one or more pieces of priority information is indicative of a prioritization of a respective geofence of the set of geofences; and
- providing at least a part of the set of geofences at least partially based on the one or more pieces of priority information to the electronic device, wherein at least the part of the set of geofences that is provided is evaluated by an electronic device, and another part of the set of geofences that is not provided is not evaluated by the electronic device.

### Embodiment 19:

A tangible computer-readable medium storing computer program code, the computer program code when executed by a processor causing an apparatus to perform and/or control:
- obtaining at least a part of a set of geofences, wherein each geofence of the set of geofence defines a respective geofence for the at least one electronic device, wherein at least the part of the set of geofences is obtained at least partially based on one or more pieces of priority information, wherein a respective priority information of the one or more pieces of priority information is indicative of a prioritization of a respective geofence of the set of geofences;
- evaluating at least the part of the set of geofences; and
- triggering at least one action at least partially based on a result of the evaluating.

### Embodiment 20:

A system, comprising:
- an apparatus according to any of the embodiments 1 to 8, or embodiment 16; and
- one or more apparatuses according to any of the embodiments 9 to 15, or embodiment 17.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, performed by an apparatus, said method comprising:
- obtaining a set of geofences, wherein each geofence of the set of geofences defines a respective geofence for an electronic device;
- determining one or more pieces of priority information for at least a part of the set of geofences, wherein a respective priority information of the one or more pieces of priority information is indicative of a prioritization of a respective geofence of the set of geofences; and
- providing at least a part of the set of geofences at least partially based on the one or more pieces of priority information to the electronic device, wherein at least the part of the set of geofences that is provided is evaluated by an electronic device, and another part of the set of geofences that is not provided is not evaluated by the electronic device.

2. The method according to claim 1, further comprising:
- evaluating at least the other part of the set of geofences that is not provided to the electronic device; and
- triggering at least one action at least partially based on a result of the evaluating.

3. The method according to claim 2, wherein the evaluating further comprises:
- obtaining or determining a location information indicative of a position of the electronic device; and
- assessing whether or not the electronic device is located within one or more boundaries as defined by each respective geofence of the other part of the set of geofences for the electronic device.

4. The method according to any of the preceding claims, wherein each geofence of the set of geofences is defined by one or more parameters, wherein at least one parameter of the one or more parameters is indicative of geographical boundaries bordering an area.

5. The method according to any of the preceding claims, wherein the one or more pieces of priority information are determined based on a type of a respective geofence of the set of geofences.

6. The method according to claim 5, wherein the type of a respective geofence is one of the following:
i) immediate geofence;
ii) intermediate geofence;
iii) not time critical geofence.

7. The method according to claim 6, wherein at least the part of the set of geofences which respective priority information comprises or represents the type i) is provided.

8. The method according to any of the preceding claims, wherein the electronic device is a low-capability device.

9. A method, performed by at least one electronic device, said method comprising:
- obtaining at least a part of a set of geofences, wherein each geofence of the set of geofence defines a respective geofence for the at least one electronic device, wherein at least the part of the set of geofences is obtained at least partially based on one or more pieces of priority information, wherein a respective priority information of the one or more pieces of priority information is indicative of a prioritization of a respective geofence of the set of geofences;
- evaluating at least the part of the set of geofences; and
- triggering at least one action at least partially based on a result of the evaluating.

10. The method according to claim 9, wherein the evaluating further comprises:
- determining or obtaining a location information indicative of a position of the at least one electronic device; and
- assessing whether or not the at least one electronic device is located within one or more boundaries as defined by each respective geofence of at least the part of the set of geofences.

11. The method according to claim 9 or claim 10, wherein each geofence of the set of geofences is defined by one or more parameters, wherein at least one parameter of the one or more parameters is indicative of geographical boundaries bordering an area.

12. The method according to any of the claims 9 to 11, wherein the at least one electronic device is a low-capability device.

13. An apparatus configured to perform and/or control or comprising respective means for performing and/or controlling the method according to any of the claims 1 to 8.

14. An electronic device configured to perform and/or control or comprising respective means for performing and/or controlling the method according to any of the claims 9 to 12.

15. A system, comprising:
- an apparatus according to claim 13; and
- one or more electronic device according to claim 14.
